(19) Europäisches Patentamt
European Patent Office
Office européen des brevets

(11) **EP 1 655 238 B1**

(12) **EUROPEAN PATENT SPECIFICATION**

(45) Date of publication and mention
of the grant of the patent:
**11.12.2013  Bulletin 2013/50**

(51) Int Cl.:
***B32B 27/08*** (2006.01)

(21) Application number: **04747365.7**

(22) Date of filing: **06.07.2004**

(86) International application number:
**PCT/JP2004/009897**

(87) International publication number:
**WO 2005/016782 (24.02.2005 Gazette 2005/08)**

(54) **PACKAGING CONTAINER**

VERPACKUNGSBEHÄLTER

CONTENANT D'EMBALLAGE

(84) Designated Contracting States:
**AT BE BG CH CY CZ DE DK EE ES FI FR GB GR
HU IE IT LI LU MC NL PL PT RO SE SI SK TR**

(30) Priority: **14.08.2003   JP 2003207590
18.09.2003   JP 2003325486
21.04.2004   JP 2004125041**

(43) Date of publication of application:
**10.05.2006   Bulletin 2006/19**

(73) Proprietor: **Toyo Seikan Kaisha, Ltd.
Shinagawa-ku
Tokyo 141-8640 (JP)**

(72) Inventors:
• **HANITA, M.,
Toyo Seikan Group Corporate R. & D.
Kanagawa 2400062 (JP)**
• **KIKUCHI, A.,
Toyo Seikan Group Corporate R. & D.
Kanagawa 2400062 (JP)**
• **KITANO, Y.,
Toyo Seikan Group Corporate R. & D.
Kanagawa 2400062 (JP)**
• **YAMADA, T.,
Toyo Seikan Group Corporate R. & D.
Kanagawa 2400062 (JP)**

(74) Representative: **Manley, Nicholas Michael
WP Thompson
Coopers Building
Church Street
Liverpool L1 3AB (GB)**

(56) References cited:
**EP-A1- 1 279 972      EP-A2- 1 241 221
JP-A- 9 176 499        US-A1- 2003 022 974**

**Description**

(Technical Field)

The present invention relates to a packing container having such functions as gas barrier property and oxygen absorbing property. More specifically, the invention relates to a packing container which exhibits excellent gas barrier property and oxygen absorbing property continuously from the initial stage of when the container was filled with the content.

(Background Art)

A polyester resin as represented by a polyethylene terephthalate exhibits excellent moldability, transparency, mechanical strength and resistance against chemicals, as well as relatively high gas barrier property such as against oxygen, and has, hence, been used in various fields of applications as packing materials such as films, sheets and bottles.

The deoxidizing agent also has long been used. As an example of applying the deoxidizing agent to the container wall, there has been known a multi-layer structure for packing comprising a laminate having oxygen gas barrier property and a layer obtained by blending an oxygen-permeating resin with a reducing substance comprising chiefly an iron powder (Japanese Examined Patent Publication (Kokoku) No. 1824/1988).

In order to improve the gas barrier property of the packing material, there has also been known a packing material having a functional resin layer with gas barrier property, such as of a saponified product of an ethylene/vinyl acetate copolymer or a polyamide, as an intermediate layer between the inner layer and the outer layer (Japanese Unexamined Patent Publication (Kokai) No. 203540/1988).

There has been known a plastic multi-layer container of a laminated structure comprising an intermediate layer of a resin composition obtained by blending a gas barrier thermoplastic resin having an oxygen permeation coefficient at 20°C and 0%RH of not larger than $10^{-12}$ cc·cm/cm$^2$·sec·cmHg and a water adsorbing amount at 20°C and 100%RH of not smaller than 0.5% blended with an organometal complex of a transition metal, and moisture-resistant thermoplastic resin layers on both sides of the intermediate layer (Japanese Unexamined Patent Publication (Kokai) No. 1-278344).

There has further been proposed a barrier wall for packing comprising a polymer including a composition having oxygen-trapping property or including a layer of the above composition, the composition trapping oxygen as the oxidizing organic component is oxidized with a metal catalyst, the oxidizing organic component being a polyamide and, particularly, a xylylene group-containing polyamide (International Patent Publication No. 2-500846).

There have been further known an oxygen absorbing resin composition containing a polyamide resin, an oxidizing organic component and a transition metal catalyst, a packing material obtained by molding the resin composition, and a multi-layer container for packing (Japanese Unexamined Patent Publication (Kokai) No. 2002-241608).

Reference is also made to US2003/022974A which discloses a resin composition having an oxygen scavenging function and which comprises 70 to 99.9 wt % of a polyvinyl alcohol resin (A) and 0.1 to 30 wt % of a thermoplastic resin (B) other than the polyvinyl alcohol resin (A), wherein the thermoplastic resin (B) has a carbon-carbon double bond and a functional group including a hetero atom, and an oxygen absorption rate of the resin composition is 0.001 ml/m$^2$ day or more.

(Disclosure of the Invention)

However, when a container is filled with an aqueous solution (oxygen-free water) in which no oxygen is dissolved, the oxygen-free water absorbs oxygen gas contained in the air remaining in gaps in the container and contained in the resin, and the oxygen concentration gradually increases in the aqueous solution.

Further, when a multi-layer container using a gas barrier layer comprising a polyamide resin or the like resin as an intermediate layer is filled with oxygen-free water, gas permeates little from the exterior to the interior of the container. However, the oxygen-free water absorbs oxygen gas contained in the air remaining in the container and in the resin of the innermost layer. Therefore, the oxygen concentration gradually increases in the oxygen-free water.

Even in the case of the multi-layer container having an intermediate layer imparted with the oxygen absorbing function by blending the gas barrier resin layer made of a polyamide resin or the like resin with a transition metal, the oxygen-free water contained therein absorbs oxygen remaining in the container and in the resin of the innermost layer in several days, and the oxygen concentration in water in the multi-layer container continues to increase. This is attributed to that, even if a transition metal that promotes the absorption of oxygen is added into the gas barrier resin layer, the gas barrier resin works to interrupt the oxygen gas remaining in the container and in the resin of the innermost layer from diffusing into the oxygen absorbing layer.

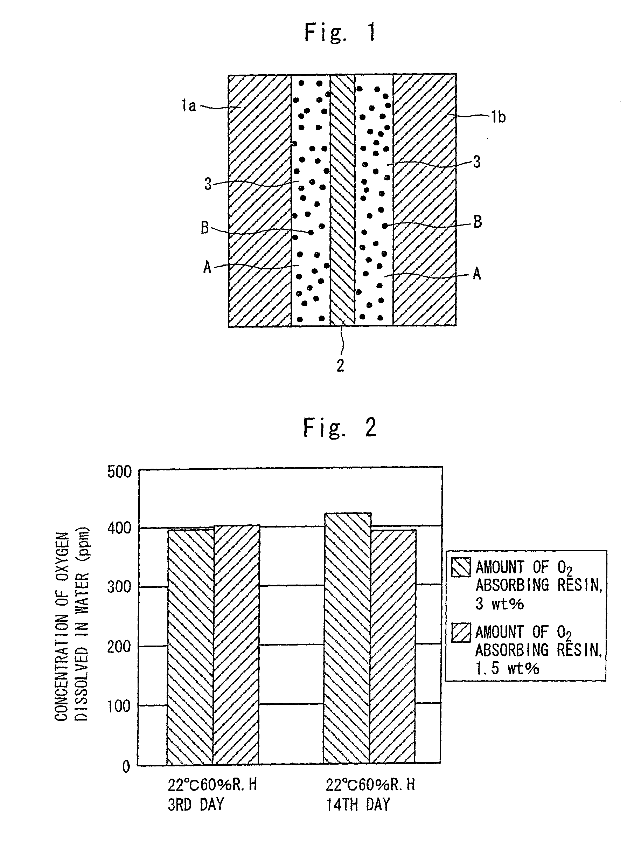

This is obvious from the fact that even when, as shown in Fig. 2, the intermediate layers of a 5-layer container (content of 327 ml)(two intermediate layers located between the inner and outer layers and the central layer) is constituted by using an oxygen absorbing functional resin composition comprising a gas barrier resin, an oxidizing organic component and a transition metal catalyst [94.75% by weight of a polymetaxylyleneadipamide, 5% by weight of a polyene type oxidizing organic component, and 0.25% by weight of a transition metal catalyst (350 ppm calculated as a metal)] in an amount that is increased from 1.5% by weight to 3% by weight with respect to the weight of the container, the concentration of oxygen dissolved in the oxygen-free water filled therein after 3 days and the concentration of oxygen dissolved therein after 14 days (both being preserved at 22°C, 60 % RH) are both about 400 ppm without decreasing.

As an intermediate layer of the multi-layer container, further, even when a resin for forming island portions having gas barrier property and oxygen absorbing function is mixed into the base material resin forming the sea portion, the initial concentration of oxygen dissolved in the oxygen-free water in the container increases but does not decrease when the ratio of the surface area of the island portions to the content of the multi-layer container is not larger than a given value.

In forming an islands-in-the-sea structure by blending a base material resin that forms a sea portion which is a continuous phase with a resin composition having oxygen absorbing function for forming islands which form a dispersed phase as an intermediate layer of a packing container and, particularly, of a multi-layer container, the present inventors have discovered the fact that the concentration of oxygen dissolved in the oxygen-free water filled in the container can be maintained low from the beginning of filling by maintaining the whole surface area of the island portions to be not smaller than a predetermined ratio relative to the volume of the multi-layer container.

Namely, it is an object of the present invention to provide a packing container having excellent gas barrier property and oxygen absorbing property from the beginning of filling the container.

Another object of the present invention is to provide a packing container capable of continuously lowering the initial concentration of oxygen of the content from the beginning of filling the container.

According to the present invention, there is provided a packing container having oxygen absorbing layers comprising a base material resin component (component A) of a thermoplastic polyester resin and an oxygen absorbing functional component (component B) containing a gas barrier resin, an oxidizing organic component and a transition metal catalyst, the oxygen absorbing layers being constituted by the base material resin component (component A) forming a continuous phase of a sea portion and by the oxygen absorbing functional component (component B) forming a dispersed phase of island portions, wherein the ratio (N/M) of the whole surface area (N cm$^2$) of the island portions of the oxygen absorbing functional component (component B) in the oxygen absorbing layers to the volume (M cm$^3$) of the packing container is not smaller than 20 (cm$^{-1}$).

In the packing container of the present invention, it is desired that:

(1) The island portions in the oxygen absorbing layers have an average particle diameter of smaller than 3.5 $\mu$m;

(2) The thermoplastic polyester resin is a polyethylene terephthalate;

(3) The gas barrier resin is a polyamide resin obtained by the polycondensation reaction of a diamine component containing chiefly a xylylenediamine having a terminal amino group concentration of not smaller than 40 eq/10$^6$ g with a dicarboxylic acid component;

(4) The oxidizing organic component comprises a polymer derived from a polyene and, particularly, comprises an acid-modified polyene polymer;

(5) The oxygen absorbing functional component (component B) contains the oxidizing organic component in an amount of 0.01 to 10% by weight;

(6) The oxygen absorbing functional component (component B) contains the transition metal catalyst in an amount of 100 to 3000 ppm calculated as transition metal atoms;

(7) The transition metal catalyst is a cobalt salt of carboxylic acid;

(8) The oxidizing organic component is not existing in the sea portion;

(9) The oxygen absorbing functional component (component B) comprises an oxidizing organic component and a transition metal catalyst;

(10) The oxidizing organic component in (9) above is a polyamide resin obtained by the polycondensation reaction of a diamine component containing chiefly a xylylenediamine having a terminal amino group concentration of smaller than 40 eq/10$^6$ g with a dicarboxylic acid component; and

(11) The packing container is the one having a multi-layer structure laminating another layer on the oxygen absorbing layers and, particularly, the one in which the oxygen absorbing layers contain the oxygen absorbing functional component (component B) in an amount of 10 to 60% by weight.

(Brief Description of the Drawings)

Fig. 1 is a view illustrating, in cross section, the structure of a packing container of the present invention; and

Fig. 2 is a view illustrating a relationship between an oxygen absorbing resin composition in the packing container and the concentration of oxygen that is dissolved.

(Best Mode for Carrying Out the Invention)

A packing container of the present invention has oxygen absorbing layers comprising a base material resin component (component A) and an oxygen absorbing functional component (component B), the oxygen absorbing layers having an islands-in-the-sea structure in which the base material resin component (A) is forming a sea portion and the oxygen absorbing functional component (component B) is forming island portions, wherein the ratio (N/M) of the whole surface area ($N$ cm$^2$) of the island portions of the oxygen absorbing functional component (component B) in the oxygen absorbing layers to the volume ($M$ cm$^3$) of the packing container is not smaller than 20 (cm$^{-1}$), preferably, not smaller than 25 (cm$^{-1}$) and, particularly preferably, not smaller than 28 (cm$^{-1}$). This makes it possible to exhibit excellent gas barrier property and oxygen absorption from the beginning of filling the container with the content, and to continuously maintain a low initial concentration of oxygen in the content from the beginning of filling.

On the other hand, even the packing container having the oxygen absorbing layers of the islands-in-the-sea structure cannot exhibit the oxygen absorbing function to a sufficient degree from the beginning of filling the container provided the ratio (N/M) of the whole surface area ($N$ cm$^2$) of island portions of the oxygen absorbing functional component (component B) in the oxygen absorbing layers to the volume ($M$ cm$^3$) of the packing container is smaller than 20 (cm$^{-2}$). Therefore, it is difficult to maintain a low oxygen concentration from the beginning of filling the container with the content.

In the present invention, the whole surface area ($N$ cm$^2$) of the island portions can be found by measuring, on an enlarged scale, the cross section thereof when the island portions have not been drawn like an extruded film or a sheet. When the final shape has been drawn like a bottle or a cup, the major portions have a decreased thickness and, particularly, the side wall portions have a decreased thickness, and it becomes difficult to observe the cross section on an enlarged scale. When the container has been drawn, therefore, the whole surface area of the island portions is found by measuring, on an enlarged scale, the cross section of an undrawn portion such as the lower portion of the bottle neck ring or the vicinity of the cup flange, since the islands-in-the-sea structure is basically formed at the time of molding the preform or the sheet, the weight of the oxygen absorbing layer (sea portion and island portions) does not vary before and after the stretching, and there is no change in the proportion of the whole surface area of the island portions through the drawing of the same ratio.

As for the whole surface area of the island portions as will be described later by way of Examples, all island portions in an electron microphotograph (SEM) are measured for their shortest diameters and the longest diameters, and their average values are regarded to be particle diameters of the island portions. The sum of the particle diameters divided by the number of particles is regarded to be an average particle diameter $r$ (cm). Here, if the whole surface area of the island portions is denoted by $N$ (cm$^2$), the weight of the container by $X$ (g), the oxygen absorbing amount of the container by $Y$ (% by weight), the ratio of the oxygen absorbing functional component B in the oxygen absorbing layer by $Z$ (% by weight), and the specific gravity of the component B by $d$ (g/cm$^3$), then, the weight of a single island portion is $4\pi r^3 d/3$, and the weight of the component B in the oxygen absorbing layer is $(XY/100) \times (Z/100)$. Therefore, the whole surface area $N$ (cm$^2$) of the island portion is expressed by,

$$N = (XYZ/10^4)/(4\Pi r^3 d/3) \times (4\pi r^2)$$
$$= 3XYZ/(rd \times 10^4)$$

The ratio of blending the resin, melt viscosity of the resin, ratio of viscosities and shearing conditions for the molten resin constitute the conditions necessary for forming the islands-in-the-sea structure having a ratio (N/M) of the whole surface area ($N$ cm$^2$) of island portions of the oxygen absorbing functional component (component B) in the oxygen absorbing layers to the volume ($M$ cm$^3$) of the packing container of not smaller than 20 (cm$^{-1}$).

Among them, what are particularly important are the ratio of blending the resins, and the ratio of melt viscosities of the resins.

To achieve the desired islands-in-the-sea structure, therefore, consideration must be given to a balance between the melt viscosities and the composition. In order to increase the whole surface area of the island portions while decreasing the average particle size of the island portions, it is desired (a) to decrease the melt viscosity of the oxygen absorbing functional component (component B) constituting the island portions to be lower than that of the base material resin component (component A) constituting the sea portion, and (b) to select the oxygen absorbing functional component (component B) in the oxygen absorbing layers to be 10 to 60% by weight and to set the base material resin component (component A) to be 40 to 90% by weight in the case of a multi-layer container, and to select the oxygen absorbing functional component (component B) to be 0.5 to 3% by weight and to set the base material resin component (component A) to be 97 to 99.5% by weight in the case of a single-layer container.

It is desired that the oxygen absorbing functional component (component B) constituting the island portions in the oxygen absorbing layers has an average particle diameter r of smaller than 3.5 μm and, particularly, not larger than 3.0 μm. Upon selecting the average particle diameter to be smaller than 3.5 μm, it is made possible to improve the mechanical strength, transparency and oxygen absorbing performance due to an increase in the surface area.

In the present invention, further, when the oxidizing organic component is contained as the oxygen absorbing functional resin component (B), it is particularly desired that the oxidizing organic component does not exist in the sea portion comprising the base material resin component (component A) from the standpoint of improving the transparency of the packing container.

The transparency of the container is affected by the state of the oxidizing organic component presumably because the oxidizing organic component used in the invention exists not only in the island portions but also in the sea portion increasing the light-scattering points. Besides, compatibility is not good between the oxidizing organic component and the base material resin component which is the sea component (particularly, polyester resin). Therefore, the oxidizing organic component is existing in the sea portion having a particle diameter that causes light to be scattered, and is deteriorating the transparency.

[Base material resin component (component A)]

The base material resin component (component A) used in the invention forms the sea portion. Concrete examples include a thermoplastic polyester resin, a polycarbonate resin, a polyacrylonitrile resin, a polyolefin resin and a polyvinyl chloride resin. Among them, the thermoplastic polyester resin is preferred. Among the thermoplastic polyester resins, it is particularly desired to use a polyethylene terephthalate, a copolymer using an isophthalic acid as part of the terephthalic acid in the polyethylene terephthalate, and a polyethylene naphthalate.

Further, when the oxygen absorbing layers comprising the base material resin component (component A) and the oxygen absorbing functional component (component B) are used as intermediate layers in the multi-layer packing container having at least the inner layer, outer layer and intermediate layers, the base material resin component (component A) may be the one having adhesiveness to the resin that constitutes a layer that contacts to the intermediate layers.

Namely, the base material resin component (component A) may be the one that has heretofore been used as an adhesive resin for forming the adhesive layer, such as a carboxylic acid like maleic acid, itaconic acid or fumaric acid, or a graft-modified olefinic resin graft-modified with an anhydride of the carboxylic acid, amide or ester. In the graft-modified olefinic resin, the olefin resin to be graft-modified is polyethylene, polypropylene or ethylene/$\alpha$-olefin copolymer. In addition to the above graft-modified olefinic resins, there can be further used, for example, ethylene/acrylic acid copolymer, ionically crosslinked olefinic copolymer, ethylene/vinyl acetate copolymer, copolymerized polyester and copolymerized polyamide. It is desired that these adhesive resins contain a carbonyl group ($>C=O$) on the main chain or on the side chain in an amount of 1 to 100 milli-equivalents (meq)/100 g and, particularly, 10 to 100 meq/100 g.

[Oxygen absorbing functional component (B)]

As the oxygen absorbing functional component (component B) used in the invention, there can be used (i) a component comprising a gas barrier resin, an oxidizing organic component and a transition metal catalyst, or (ii) a component comprising an oxidizing organic component and a transition metal catalyst. More preferably, there is used (i) the component comprising the gas barrier resin, oxidizing organic component and transition metal catalyst.

In this specification, the oxygen absorbing functional component (component B) is a term used for making a distinction from the resin component related to the base material resin component (component A). (i) When the component comprising the gas barrier resin, oxidizing organic component and transition metal catalyst is used as the oxygen absorbing functional component (component B).

The oxygen absorbing functional component (component B) comprising the gas barrier resin, oxidizing organic component and transition metal catalyst of the invention, forms island portions in the oxygen absorbing layer.

The content of the oxygen absorbing functional component (component B) in the oxygen absorbing layer is, preferably, 10 to 60% by weight and, more preferably, 10 to 40% by weight when the packing container has a multi-layer structure, and is, preferably, 0.5 to 3% by weight and, more preferably, 0.5 to 2% by weight when the packing container has a single layer structure.

Upon selecting the ratio of the oxygen absorbing functional component (component B) to lie within the above range, both functions of oxygen absorbing property and gas barrier property can be effectively exhibited from the beginning of filling the packing container with the content.

(i-1) Gas barrier resin.

The gas barrier resin referred to here stands for those having property of shutting off various gases, and may be ethylene/vinyl alcohol copolymer or a polyamide resin that are usually used in the field of packing materials. However, there can be used any other known gas barrier resins.

As the ethylene/vinyl alcohol copolymer, there can be preferably used a saponified product of a copolymer obtained by saponifying an ethylene/vinyl acetate copolymer containing ethylene in an amount of 20 to 60 mol% and, particularly, 25 to 50 mol%, such that the degree of saponification is not lower than 96 mol% and, particularly, not lower than 99 mol%. The ethylene/vinyl alcohol copolymer (saponified product of ethylene/vinyl acetate copolymer) should have a molecular weight large enough for forming a film, and is desired to possess an intrinsic viscosity of not smaller than 0.01 dL/g and, particularly, not smaller than 0.05 dL/g as measured in a mixed solvent of phenol/water at a weight ratio of 85/15 at 30°C.

As the gas barrier resins other than the ethylene/vinyl alcohol copolymers, there can be exemplified the following polyamide resins.

As the polyamide resin, there can be exemplified (a) an aliphatic, alicyclic or semi-aromatic polyamide derived from a dicarboxylic acid component and a diamine component, (b) a polyamide deriveved from aminocarboxylic acid or a lactam thereof, or (c) a copolyamide thereof or a blend thereof.

As the dicarboxylic acid component, there can be exemplified aliphatic dicarboxylic acids having 4 to 15 carbon atoms, such as succinic acid, adipic acid, sebacic acid, decanedicarboxylic acid, undecanedicarboxylic acid and dodecanedicarboxylic acid, and aromatic dicarboxylic acids such as terephthalic acid and isophthalic acid.

As the diamine components, there can be exemplified straight-chain or branched-chain alkylenediamines having 4 to 25 and, particularly, 6 to 18 carbon atoms, such as 1,6-diaminohexane, 1,8-diaminooctane, 1,10-diaminodecane, and 1,12-diaminododecane; aliphatic diamines such as bis(aminomethyl)cyclohexane, bis(4-aminocyclohexyl)methane, 4,4'-diamino-3,3'-dimethyldicyclohexylmethane and, particularly, bis(4-aminocyclohexyl)methane, 1,3-bis(aminocyclohexyl)methane, and 1,3-bis(aminomethyl)cyclohexane; and aromatic aliphatic diamines such as m-xylylenediamine and/or p-xylylenediamine.

As the aminocarboxylic acid component, there can be exemplified aliphatic aminocarboxylic acid, such as $\alpha$, $\beta$,$\omega$-aminocaproic acid, $\omega$-aminooctanoic acid, $\omega$-aminoundecanoic acid, $\omega$-aminododecanoic acid, as well as aromatic aliphatic aminocarboxylic acids such as para-aminomethylbenzoic acid and para-aminophenylacetic acid.

Among these polyamide resins, it is desired to use a xylylene group-containing polyamide to fulfill the object of the invention. Concretely, it is desired to use homopolymers such as polymetaxylyleneadipamide, polymetaxylylenesebacamide, polymetaxylylenesuberamide, polyparaxylylenepimeramide and polymetaxylyleneazeramide; and copolymers such as metaxylylene/paraxylyleneadipamide copolymer, metaxylylene/paraxylylenepimeramide copolymer, metaxylylene/paraxylylenesebacamide copolymer, and metaxylylene/paraxylyleneazeramide copolymer; or copolymers obtained by copolymerizing these homopolymer or copolymer components with an aliphatic diamine such as hexamethylenediamine, an alicyclic diamine such as piperadine, an aromatic diamine such as para-bis(2-aminoethyl)benzene, an aromatic dicarboxylic acid such as terephthalic acid, lactam such as $\epsilon$-caprolactam, $\omega$-aminocarboxylic acid such as 7-aminoheptanoic acid, or an aromatic aminocarboxylic acid such as para-aminomethylbenzoic acid. It is, however, particularly desired to use a polyamide obtained from a diamine component using m-xylylenediamine and/or p-xylylenediamine as a chief component and aliphatic dicarboxylic acid and/or aromatic dicarboxylic acid.

The xylylene-containing polyamide exhibits superior oxygen barrier property to other polyamide resins, and is suited for achieving the object of the present invention.

These polyamides, too, should have molecular weights large enough for forming the film, and are desired to possess relative viscosities of not smaller than 1.1 and, particularly, not smaller than 1.5 as measured in a concentrated sulfuric acid (concentration of 1.0 g/dL) at 30°C.

When the polymetaxylyleneadipamide is to be used, it is desired to use a polyamide resin obtained by the polycondensation reaction of a diamine component comprising chiefly a xylylenediamine having a terminal amino group concentration of not smaller than 40 eq/$10^6$ g with a dicarboxylic acid component, since it is not deteriorated by oxidation in absorbing oxygen.

(i-2) Oxidizing organic component.

As the oxidizing organic component, there can be used an ethylenically unsaturated group-containing polymer. This polymer has a carbon-to-carbon double bond and in which the double-bonded portions and, particularly, the $\alpha$-methylene neighboring the double-bonded portion are easily oxidized with oxygen thereby to trap oxygen.

The ethylenically unsaturated group-containing polymer is derived by using, for example, polyene as a monomer. Though there is no particular limitation, suitable examples of the polyene include conjugated dienes such as butadiene and isoprene; chained nonconjugated dienes such as 1,4-hexadiene, 3-methyl-1,4-hexadiene, 4-methyl-1,4-hexadiene, 5-methyl-1,4-hexadiene, 4,5-dimethyl-1,4-hexadiene, and 7-methyl-1,6-octadiene; cyclic nonconjugated dienes such as methyltetrahydroindene, 5-ethylidene-2-norbornene, 5-methylene-2-norbornene, 5-isopropylidene-2-norbornene, 5-vinylidene-2-norbornene, 6-chloromethyl-5-isopropenyl-2-norbornene and dicyclopentadiene; and trienes and chloroprenes such as 2,3-diisopropylidene-5-norbornene, 2-ethylidene-3-isopropylidene-5-norbornene, and 2-propenyl-2,2-norbornadiene.

Namely, as an oxidizing polymer, there can be used a homopolymer of the polyene, a random copolymer of a combination of two or more kinds of the above polyenes or of a combination with other monomers, or a block copolymer. As the other monomers to be copolymerized with the above polyene, there can be exemplified an $\alpha$-olefin having 2 to 20 carbon atoms, such as ethylene, propylene, 1-butene, 4-methyl-1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-nonadecene, 1-eicocene, 9-methyl-1-decene, 11-methyl-1-dodecene and 12-ethyl-1-tetradecene. There can be further used styrene, vinyltriene, acrylonitrile, methacrylonitrile, vinyl acetate, methyl methacrylate and ethyl acrylate.

Among the polymers derived from the above-mentioned polyenes, there can be preferably used polybutadiene (BR), polyisoprene (IR), natural rubber, nitrile-butadiene rubber (NBR), styrene-butadiene rubber (SBR), chloroprene rubber, and ethylenepropylene-diene rubber (EPDM) to which only, however, the invention is in no way limited.

In addition to the above-mentioned ethylenically unsaturated group-containing polymers, there can be used polymers that are subject to be oxidized by themselves, such as polypropylene and ethylene/propylene copolymer as oxidizing organic components.

In the present invention, it is desired that the above-mentioned oxidizing polymers and copolymers thereof have viscosities at 40°C of 1 to 200 Pa·s s from the standpoint of moldability.

It is desired that these polyene type polymers are acid-modified polyene polymers into which a carboxylic acid group, carboxylic anhydride group or hydroxyl group is introduced. As the monomer used for introducing these functional groups, there can be used an ethylenically unsaturated monomer having a functional group.

As the ethylenically unsaturated monomer having the functional group, it is desired to use an unsaturated carboxylic acid or derivatives thereof. Concrete examples include $\alpha,\beta$-unsaturated carboxylic acids such as acrylic acid, methacrylic acid, maleic acid, fumaric acid, itaconic acid, citraconic acid and tetrahydrophthalic acid; unsaturated carboxylic acid such as bicyclo[2,2,1]hepto-2-ene-5,6-dicarboxylic acid; $\alpha,\beta$-unsaturated carboxylic anhydrides such as maleic anhydride, itaconic anhydride, citraconic anhydride and tetrahydrophthalic anhydride; and unsaturated carboxylic anhydrides such as bicyclo[2,2,1]hepto-2-ene-5,6-dicarboxylic anhydride and the like.

The acid-modified polyene type polymer can be produced by using a resin having a carbon-to-carbon double bond as a base polymer, and graft-copolymerizing the base polymer with an unsaturated carboxylic acid or with a derivative thereof by a known means, or by the random copolymerization of the above polyene with an unsaturated carboxylic acid or a derivative thereof.

It is desired that the acid-modified polyene polymer particularly suited for the object of the invention contains the unsaturated carboxylic acid or the derivative thereof in an amount of 0.01 to 10 mol%.

When the content of the unsaturated carboxylic acid or the derivative thereof lies within the above range, the acid-modified polyene polymer favorably disperses in the polyamide resin to smoothly absorb oxygen. There can be further favorably used a hydroxyl group-modified polyene polymer having a hydroxyl group at the terminal.

As the oxidizing organic component, further, there can be used a polymetaxylylenediadipamide having a terminal amino group concentration of smaller than 40 eq/$10^6$ g.

In the present invention, it is desired that the above oxidizing polymers and the copolymers thereof have viscosities at 40°C of 1 to 200 Pa·s from the standpoint of moldability and the like.

It is further desired that the oxidizing organic component comprising the oxidizing polymer or the copolymer thereof is contained at a ratio of 0.01 to 10% by weight in the oxygen absorbing functional component (component B) and, particularly, at a ratio of 1 to 8% by weight.

(i-3) Transition metal catalyst.

As the transition metal catalyst, there can be preferably used metals of the Group VIII of periodic table, such as iron, cobalt and nickel; metals of the Group I, such as copper and silver; metals of the Group IV such as tin, titanium and zirconium, metals of the Group V such as vanadium; metals of the Group VI, such as chromium; and metals of the Group VII, such as manganese, etc. Among them, cobalt is particularly suited for the object of the invention since it promotes oxygen absorbing property (oxidation of the oxidizing organic component) to a striking degree.

The transition metal catalyst is, usually, used in the form of an inorganic salt, an organic salt or a complex of the above transition metal having a low valency. As the organic salt, there can be used a halide such as a chloride, an oxy salt of sulfur, such as a sulfate, an oxy acid salt of nitrogen, such as a nitrate, a phosphorus oxy salt of a phosphate, and a silicate.

As the organic salt, there can be exemplified a carboxylate, a sulfonate and a phosphate. For the object of the invention, however, a carboxylate is preferred. Concrete examples thereof include transition metal salts such as of acetic acid, propionic acid, isopropionic acid, butanoic acid, isobutanoic acid, pantanoic acid, hexanoic acid, heptanoic acid, isoheptanoic acid, octanoic acid, 2-ethylhexanoic acid, nonanoic acid, 3,5,5-trimethylhexanoic acid, decanoic acid, neodecanoic acid, undecanoic acid, lauric acid, myristic acid, palmitic acid, margaric acid, stearic acid, arachic acid, linderic acid, tsuzuic acid, petroselinic acid, oleic acid, linolic acid, linoleic acid, arachidonic acid, formic acid, oxalic acid, sulfamic acid, and naphthenic acid.

As the complex of a transition metal, there can be exemplified a complex with β-diketone or with β-keto acid ester. As the β-diketone or β-keto acid ester, there can be used, for example, acetylacetone, ethyl acetoacetate, 1,3-cyclohexadion, methylene bis-1,3-cyclohexadion, 2-benzyl-1,3-cyclohexadion, acetyl tetralone, palmitoyl tetralone, stearoyl tetralone, benzoyl tetralone, 2-acetylcyclohexanone, 2-benzoylcyclohexanone, 2-acetyl-1,3-cyclohexadion, benzoyl-p-chlorobenzoylmethane, bis(4-methylbenzoyl)methane, bis(2-hydroxybenzoyl)methane, benzoylacetone, tribenzoylmethane, diacetylbenzoylmethane, stearoylbenzoylmethane, palmitoylbenzoylmethane, lauroylbenzoylmethane, dibenzoylmethane, bis(4-chlorobenzoyl)methane, benzoylacetylphenylmethane, stearoyl(4-methoxybenzoyl)methane, butanoylacetone, distearoylmethane, stearoylacetone, bis(cyclohexanoyl)methane and dipivaroylmethane.

In the present invention, further, it is desired that the oxygen absorbing functional component (component B) is blended with the transition metal catalyst at a concentration of the transition metal atoms (on the basis of the weight concentration, hereinafter the same) of 100 to 3000 ppm or, concretely, 100 to 2000 ppm in the case of cobalt, 150 to 1500 ppm in the case of iron, and 200 to 2000 ppm in the case of manganese. (ii) When the component comprising an oxidizing organic component and a transition metal catalyst is used as the oxygen absorbing functional component (component B).

The content of the oxygen absorbing functional component (component B) in the oxygen absorbing layer is, preferably, 10 to 60% by weight and, more preferably, 20 to 60% by weight when the packing container has a multi-layer structure, and is, preferably, 0.5 to 3% by weight and, more preferably, 1 to 3% by weight when the packing container has a single-layer structure.

By selecting the content of the oxygen absorbing functional component (component B) to lie in the above range, the two functions of oxygen absorbing property and gas barrier property can be effectively exhibited from the beginning of filling the packing container with the content.

(ii-1) Oxidizing organic component.

The polymetaxylylenediadipamide having a terminal amino group concentration of smaller than 40 eq/$10^6$ g works as an oxygen absorbing resin in the presence of a transition metal catalyst, and can be used as an oxidizing organic component.

(ii-2) Transition metal catalyst.

The kind and blending ratio of the transition metal catalyst that is used are the same as those of the case of (i) above.

Various means can be used for blending (i) the gas barrier resin with the oxidizing organic component and the transition metal catalyst, or for blending (ii) the oxidizing organic component with the transition metal catalyst. The blending can be conducted in any order without particular limitation.

For example, by dry-blending or melt-blending the gas barrier resin with the oxidizing organic component, a blend of the two can be easily prepared.

The transition metal catalyst is used in an amount smaller than those of the gas barrier resin and the oxidizing organic component. For accomplishing a homogeneous blend, therefore, the transition metal catalyst is, usually, dissolved in an organic solvent. To this solution are mixed the powdery or granular gas barrier resin and the oxidizing organic component. As required, the mixture is dried in an inert atmosphere.

As the solvent for dissolving the transition metal catalyst, there can be used alcohol solvents such as methanol, ethanol and butanol; ether solvents such as dimethyl ether, diethyl ether, methyl ethyl ether, tetrahydrofurane and dioxane; ketone solvents such as methyl ethyl ketone and cyclohexanone; and hydrocarbon solvents such as n-hexane and cyclohexane. The solvent is usually used in such an amount that the concentration of the transition metal catalyst is 5 to 90% by weight.

It is desired that the oxygen absorbing functional component (component B) comprising (i) the gas barrier resin, oxidizing organic component and transition metal catalyst, or (ii) the oxidizing organic component and transition metal catalyst, is mixed and is, then, preserved in a non-oxidizing atmosphere so that no oxidation takes place in the preceding stage. For this purpose, it is desired to effect the mixing or the drying under a reduced pressure or in a nitrogen stream.

The mixing and drying are effected in a stage preceding the molding step by using an extruder or an injection machine of the bent type or equipped with a drier.

Further, there is prepared a master batch of the gas barrier resin and/or the oxidizing organic component containing the transition metal catalyst at a relatively high concentration, and the master batch is dry-blended with the unblended gas barrier resin to obtain the oxygen absorbing functional component (component B) of the present invention.

Though usually not required, the oxygen absorbing functional component (component B) of the present invention can, as required, be blended with a known activating agent. Though there is no limitation, suitable examples of the activating agent include hydroxyl group- and/or carboxyl group-containing polymers, such as polyethylene glycol, polypropylene glycol, ethylene vinyl alcohol copolymer, ethylene/methacrylic acid copolymer and various ionomers.

The hydroxyl group- and/or carboxyl group-containing polymer is blended in an amount of not larger than 30 parts by weight and, particularly, from 0.01 to 10 parts by weight per 100 parts by weight of the gas barrier resin.

Further, the oxygen absorbing functional component (component B) used in the invention may be blended with known blending agents, such as filler, coloring agent, heat stabilizer, aging stabilizer, antioxidant, age resistor, photo stabilizer, ultraviolet ray absorber, antistatic agent, lubricant such as metal soap wax, reforming resin or rubber according to a known recipe.

Upon being blended with the lubricant, the resin does not bite into the screw. As the lubricant, there is usually used a metal soap such as magnesium stearate or calcium stearate; those of the type of hydrocarbons, such as fluidized, natural or synthetic paraffin, micro wax, polyethylene wax, or chlorinated polyethylene wax; those of the type of aliphatic acid such as stearic acid, lauric acid; those of the aliphatic acid monoamide or bisamide, such as stearic acid amide, palmitic acid amide, oleic acid amide, erucic amide, methylenebisstero amide, and ethylenebisstero amide; those of the ester type, such as butyl stearate, cured castor oil and ethylene glycol monostearate; those of the alcohol type, such as cetyl alcohol and stearyl alcohol; and a mixed system thereof.

The amount of addition of the lubricant is preferably in a range of 50 to 1000 ppm on the basis of the gas barrier resin in the case of (i) the oxygen absorbing functional component (component B) comprising the gas barrier resin, oxidizing organic component and transition metal catalyst, or on the basis of the oxidizing organic component in the case of (ii) the oxygen absorbing functional component (component B) comprising the oxidizing organic component and the transition metal catalyst.

[Packing container]

The base material resin component (component A) and the oxygen absorbing functional component (component B) can be blended by dry- or melt-blending the base material resin component (component A) directly with the gas barrier resin, oxydizing organic component and transition metal catalyst (oxidizing catalyst) of the oxygen absorbing functional component (component B), or by kneading and pelletizing the oxygen absorbing functional component (component B) and the base material resin component (component A) in advance by using a biaxial extruder, feeding the pellets to the hopper of an extruder for forming the oxygen absorbing layer thereby to form the oxygen absorbing layer. In the former case, the gas barrier resin, oxidizing organic component and transition metal catalyst are dispersed in the sea portion of the base material resin component (component A). In the latter case, too, the oxidizing organic component and/or the transition metal catalyst are partly made present in the sea portion of the base material resin component (component A). In order that the oxidizing organic component is not made present in the sea portion of the base material resin component (component A), the gas barrier resin, oxidizing organic component and the transition metal catalyst are kneaded together to obtain a stranded resin composition while deaerating by using a biaxial extruder. Then, the stranded resin composition is pelletized, dry-blended with the base material resin component (component A), and is fed into the hopper of an extruder for forming oxygen absorbing layer thereby to obtain an oxygen absorbing layer.

The packing container of the present invention may be the one made of a single oxygen absorbing layer comprising the base material resin component (component A) and the oxygen absorbing functional component (component B). Desirably, however, the packing container is the one having a multi-layer structure including at least one oxygen absorbing layer. In particular, it is desired that the packing container uses the oxygen absorbing layer as at least an intermediate layer in the multiplicity of layers so will not to be exposed to the outer surface of the container and so will not to come into direct contact with the content.

Fig. 1 is a view illustrating, in cross section, the structure of a packing container of the invention, i.e., illustrating an undrawn portion that has not been put to the draw working and is comprising a two-kind-five-layer sheet having an inner layer 1a, an outer layer 1b, an intermediate layer 2 and oxygen absorbing layers 3, the oxygen absorbing layers 3 being provided between the inner layer 1a and the intermediate layer 2, and between the outer layer 1b and the intermediate layer 2.

There can be further produced a two-kind-three-layer container having the oxygen absorbing layer between the inner layer and the outer layer.

In the multi-layer container, examples of the thermoplastic resin of the other layer combined with the oxygen absorbing layer include thermoplastic polyester resin, polycarbonate resin, polyacrylonitrile resin, polyolefin resin, polyvinyl chloride resin, or any other gas barrier resin.

As the thermoplastic polyester resin, there can be exemplified those resins exemplified above to be used for the base material resin component (A).

As the polyolefin resin, there can be used polyethylenes (PE) such as low-density polyethylene (LDPE), middle-density polyethylene (MDPE), high-density polyethylene (HDPE), linear low-density polyethylene (LLDPE), and linear very low-density polyethylene (LVLDPE), as well as polypropylene (PP), ethylene/propylene copolymer, polybutene-1, ethylene/butene-1 copolymer, propylene/butene-1 copolymer, ethylene/propylene/butene-1 copolymer, ethylene/vinyl acetate copolymer, ionically crosslinked olefin copolymer (ionomer) or a blend thereof. As the most suitable example of the gas barrier resin, there can be exemplified an ethylene/vinyl alcohol copolymer (EVOH), such as a saponified product of a copolymer obtained by saponifying an ethylene/vinyl acetate copolymer having an ethylene content of 20 to 60 mol% and, particularly, 25 to 50 mol% such that the degree of saponification is not smaller than 96 mol% and, particularly, not smaller than 99 mol%. It is desired that the saponified product of the ethylene/vinyl alcohol copolymer has a molecular weight large enough for forming a film, and has a viscosity of not smaller than 0.01 dL/g and, particularly, not smaller than 0.05 dL/g as measured in a mixed solvent of phenol and water at a weight ratio of 85:15 under the condition of a concentration of 30% by weight. As another example of the gas barrier resin, there can be used a cyclic olefin copolymer (COC) and, particularly, a copolymer of an ethylene and a cyclic olefin.

The polycarbonate resin, polyacrylonitrile resin and the polyvinyl chloride resin are those that have been widely placed in the market for films and sheets without any particular limitation.

In producing the multi-layer container, an adhesive resin may be interposed as required among the resin layers.

As the adhesive resin, there can be exemplified a thermoplastic resin containing a carbonyl (-CO-) group based on carboxylic acid, carboxylic anhydride, carboxylate, carboxylic acid amide or carboxylic acid ester on the main chain or on the side chain at a concentration of 1 to 700 meq/100 g of resin and, particularly, 10 to 500 meq/100 g of resin. Suitable examples of the adhesive resin include ethylene/acrylic acid copolymer, ionically crosslinked olefin copolymer, maleic anhydride-grafted polyethylene, maleic anhydride-grafted polypropylene, acrylic acid-grafted polyolefin, ethylene/vinyl acetate copolymer, copolymerized polyester and copolymerized polyamide which may be used in one kind or in a combination of two or more kinds. These resins are useful for the lamination by the simultaneous extrusion or by sandwich lamination.

Further, a thermosetting adhesive resin of the type of isocyanate or epoxy is also used for adhering and laminating the gas barrier resin film that has been formed in advance and the moisture-resistant resin film.

Though there is no particular limitation, the thickness of the oxygen absorbing layer in the packing container of the invention is, usually, 10 to 1000 $\mu$m and, particularly, 100 to 500 $\mu$m in the case of the packing container comprising a single oxygen absorbing layer, and 1 to 300 $\mu$m and, particularly, 3 to 50 $\mu$m in the case of a multi-layer container. That is, when the thickness of the oxygen absorbing layer becomes smaller than a given range, the barrier property and oxygen absorbing performance are deteriorated. When the thickness of the oxygen absorbing layer exceeds a given range, on the other hand, no distinguished advantage is obtained concerning the oxygen absorption but rather bringing about disadvantage in economy such as an increase in the amount of the resin, and decreased container properties such as decreased flexibility and softness of the material.

As for the resin composition constituting the oxygen absorbing layer and the multi-layer structure of the packing container of the invention, the resin composition constituting another layer is melt-kneaded by using an extruder and is primarily molded into a film or a sheet through a T-die, a circular die (ring die) and is, further, secondarily molded into a bottle, a cup, a tray or a tubular container thereby to mold a packing container.

When an injection machine is used, the molten resin is injected into an injection metal mold to produce a container or a preform for producing the container.

When a compression molding method is employed, the resin composition is extruded by an extruder into a predetermined molten resin mass which is, then, compression-molded in a metal mold to produce a container or a preform for producing the container.

The packing container of the invention is useful for preventing a drop of taste of the content due to oxygen. The contents that can be filled may be beverages such as tea, beer, wine, fruits juice, carbonated soft drinks, etc., foods such as fruits, nuts, vegetables, meats, infant's foods, coffee, jam, mayonnaise, ketchup, edible oils, dressings, sauces, food boiled down in soy, milk products, as well as medicines, cosmetics, gasoline and the like, that are liable to be deteriorated by the presence of oxygen, to which only, however, the use is in no way limited.

(Examples)

The present invention will now be concretely described by way of the working examples, which, however, are not to limit the invention.

In Examples, evaluations were based on the methods described below.

(1) Measurement of concentration of oxygen dissolved in water in the multi-layer bottle.

In Examples and in Comparative Examples, oxygen-free water was obtained by using an oxygen-free water-producing device (LOW DISSOLVED OXYGEN: manufactured by Miura Kogyo Co.). Multi-layer bottles that have been prepared were fully filled with the oxygen-free water while flowing a nitrogen gas in a manner that the air bubbles were not mixed, and were sealed with aluminum caps. The multi-layer bottles were preserved in a constant-temperature constant-humidity chamber maintained at 22°C 60% for 14 days. The concentrations of oxygen dissolved in water in the multi-layer bottles were measured by using an instrument for measuring the concentration of oxygen dissolved in water (oxygen indicator: Orbisphere Laboratories). (2) Measurement of the whole surface area of the domains.

Samples 2 mm wide and 10 mm long were cut out from the undrawn portions (under the neck ring) of the multi-layer bottles and from the preforms, were surfaced in cross section on one side thereof by using an ultramicrotome, and were put to the pretreatment, i.e., platinum was deposited by vacuum evaporation in vacuum at 10 mA for 60 seconds. The sectional surfaces of the pretreated samples were observed by using a scanning type electron microscope (JMS-6300F: manufactured by Nihon Denshi Co.) at an acceleration voltage of 3 kV to evaluate the phase structures.

By using photographs of islands-in-the sea structures of the bottles (lower portions of the neck ring and preforms) shot by using the scanning type electron microscope (JMS-6300F: manufactured by Nihon Denshi Co.) at a magnification of 3000 times, the total numbers n in the photographs were counted. By giving attention to the island portions, further, the shortest diameters ($a_i$) of the particles and the longest diameters ($b_i$) thereof were measured, and the whole average particle diameter r was found from the particle diameters $r_i$ in compliance with the following formula (1), and the whole surface area of the island portions in the bottle was found from the following formula (2),

$$r = \sum_{1}^{n} r_i/n \qquad\qquad --- \ (1)$$

wherein $r_i$ is a diameter of the island portion, n is a number of the island portions, and when a short diameter of the island portion is $a_i$ and a long diameter of the island portion is $b_i$, the diameter $r_i$ of the island portion is $r_i = (a_i + b_i)/2$,

$$N = 3XYZ/(rd \times 10^4) \qquad\qquad --- \ (2)$$

wherein X is a weight (g) of the container, Y is a ratio (% by weight) of the oxygen absorbing layer in the bottle, Z is a ratio (% by weight) of the oxygen absorbing functional component B in the oxygen absorbing layer, and d is a specific gravity (g/cm$^3$) of the component B.

(Example 1)

Pellets of an oxygen absorbing functional resin composition were prepared by using, as a base material, a gas barrier resin of a polymetaxylyleneadipamide resin [T-600: manufactured by Toyo Boseki Co.] having a terminal amino group concentration immediately after the moisture-proof package was opened of 87 eq/10$^6$ g, and by kneading the oxidizing organic component with an oxygen absorbing functional resin composition containing 5% by weight of a liquid maleic anhydride-modified polybutadiene [M-2000-20: manufactured by Nihon Sekiyu Kagaku Co.] and 350 ppm, calculated as a metal, of a transition metal catalyst or cobalt neodecanoate [DICNATE 5000: manufactured by Dainihon Ink Kagaku Kogyo Co.].

There was used a co-injection molding machine equipped with three injection machines, i.e., an injection machine (a) for the inner and outer PET layers, an injection machine (b) for the intermediate PET layer and an injection machine (c) for the oxygen absorbing intermediate layers (components A and B). To the injection machines (a) and (b), there was fed a polyethylene terephthalate [RT543C: manufactured by Nihon Unipet Co.] dried at 150°C for 4 hours. To the injection machine (c), there was fed a dry blend of the polyethylene terephthalate [RT543C: manufactured by Nihon Unipet Co.] dried at 150°C for 4 hours as the base material resin component (component A) and the pellets of the oxygen absorbing functional resin composition as the oxygen absorbing functional component (component B), the composition ratio of the base material resin component (component A) to the oxygen absorbing functional component (component B) being 50:50. There were thus successively injection-molded two-kind-five-layer (a/c/b/c/a) multi-layer preforms, the inner layer, outer layer and the intermediate layer thereof being PET layers, and oxygen absorbing intermediate layers (oxygen absorbing layers) being sandwiched among them.

The weight of the preform was 26.5 g and in which the ratio of the oxygen absorbing intermediate layers was 3% by weight. The obtained preform was biaxially draw-blow-molded to form a two-kind-five-layer multi-layer bottle having a volume of 327 ml, which was, then, filled with oxygen-free water and was preserved at 22°C 60% for 14 days. Thereafter, the concentration of oxygen dissolved in water in the container was measured. Further, the cross section of the multi-layer bottle preform was observed through the electron microscope to find an average particle diameter and a ratio (N/M) of the whole surface area of the island portions to the volume of the multi-layer container.

(Example 2)

A two-kind-five-layer multi-layer bottle was prepared in the same manner as in Example 1 but feeding, as the base material resin component (component A), a polyethylene terephthalate [NES 2040: manufactured by Unitika Co.] having a melt viscosity lower than that of Example 1 to the injection machine (c) in order to measure the concentration of oxygen dissolved in water and to analyze the phase structure by using the electron microscope.

(Example 3)

A two-kind-five-layer multi-layer bottle was prepared in the same manner as in Example 1 but feeding, as the gas barrier resin of the oxygen absorbing functional component (component B), a polymetaxylyleneadipamide resin [T-660: manufactured by Toyo Boseki Co.] having a melt viscosity higher than that of Example 1 to the injection machine (c) in order to measure the concentration of oxygen dissolved in water and to analyze the phase structure by using the electron microscope.

(Example 4)

A two-kind-five-layer multi-layer bottle was prepared in the same manner as in Example 1 but  feeding a dry blend of the base material resin component (component A) and the oxygen absorbing functional component (component B) of a composition ratio of 60:40 to the injection machine (c) in order to measure the concentration of oxygen dissolved in water and to analyze the phase structure by using the electron microscope.

(Example 5)

A two-kind-five-layer multi-layer bottle was prepared in the same manner as in Example 1 but feeding a dry blend of the base material resin component (component A) and the oxygen absorbing functional component (component B) of a composition ratio of 70:30 to the injection machine (c) to obtain a bottle having the volume of 310 ml in order to measure the concentration of oxygen dissolved in water and to analyze the phase structure by using the electron microscope.

(Example 6)

A two-kind-five-layer multi-layer bottle was prepared in the same manner as in Example 5 but successively injection-molding a two-kind-five-layer multi-layer preform and selecting the ratio of the oxygen absorbing intermediate layers to be 8% by weight in order to measure the concentration of oxygen dissolved in water and to analyze the phase structure by using the electron microscope.

(Example 7)

A two-kind-five-layer multi-layer bottle was prepared in the same manner as in Example 5 but selecting the amount of the oxidizing organic component of the oxygen absorbing functional component (component B) to be 2.5% by weight in order to measure the concentration of oxygen dissolved in water and to analyze the phase structure by using the electron  microscope.

(Example 8)

A two-kind-five-layer multi-layer bottle was prepared in the same manner as in Example 7 but successively injection-molding a two-kind-five-layer multi-layer preform and selecting the ratio of the oxygen absorbing layers to be 8% by weight in order to measure the concentration of oxygen dissolved in water and to analyze the phase structure by using the electron microscope.

(Example 9)

A two-kind-five-layer multi-layer bottle was prepared in the same manner as in Example 6 in order to measure the concentration of oxygen dissolved in water and to analyze the phase structure by using the electron microscope but melt-kneading, as the oxygen absorbing functional component (component B), the polymetaxylyleneadipamide resin pellets [607: manufactured by Mitsubishi Gas Kagaku Co.] having a terminal amino group concentration immediately after opening the moisture-proof package of 24 eq/$10^6$ g on which cobalt neodecanoate [DICANATE 5000: manufactured by Dainihon Ink Kagaku Co.] has been deposited in an amount of 400 ppm calculated as cobalt by using a biaxial extruder to prepare pellets of an oxygen absorbing functional resin composition and selecting the amount of the oxygen absorbing functional component (component B) in the oxygen absorbing layers to be 10% by weight.

(Example 10)

A single layer bottle was prepared in the same manner as in Example 5 but feeding a dry blend of the base material resin component (component A) and the oxygen absorbing functional component (component B), which has a composition ratio of 98:2, to the  injection machines (a), (b) and (c) to injection-mold a perform. As to the single layer bottle, the concentration of oxygen in water was measured and the phase structure was analyzed by using the electron microscope.

(Comparative Example 1)

A two-kind-five-layer multi-layer bottle was prepared in the same manner as in Example 2 in order to measure the concentration of oxygen dissolved in water and to analyze the phase structure by using the electron microscope but feeding, to the injection machine (c), the polyethylene terephthalate [NES 2040: manufactured by Unitika Co.] as the base material resin component (component A) and the polymetaxylyleneadipamide resin [T-660: manufactured by Toyo Boseki Co.] having a melt viscosity higher than that of Example 1 as the gas barrier resin of the oxygen absorbing functional component (component B).

(Comparative Example 2)

A two-kind-five-layer multi-layer bottle was prepared in the same manner as in Example 1 in order to measure the concentration of oxygen dissolved in water and to analyze the phase structure by using the electron microscope but preparing a bottle having a volume of 375 ml by feeding, to the injection machine (c), a dry blend of a polyethylene terephthalate [TR4550BH: manufactured by Teijin Co.] having a melt viscosity lower than that of Example 1 as the base material resin component (component A) and having a composition ratio of the base material resin composition (composition A) and the oxygen absorbing functional component (component B) of 40:60.

(Comparative Example 3)

A two-kind-five-layer multi-layer bottle was prepared in the same manner as in Example 9 in order  to measure the concentration of oxygen dissolved in water and to analyze the phase structure by using the electron microscope but selecting the amount of the oxygen absorbing functional component (component B) in the oxygen absorbing layer to be 5% by weight.

### Table 1

|  | Base resin component (A) | O₂ absorbing functional component (B) | O₂ absorbing intermediate layers (wt%) | Ratio of component B (wt%) | Average particle diameter of component B (μm) |
|---|---|---|---|---|---|
| Ex.1 | PET | MXD6/MA-Pbd/Co | 3 | 50 | 1.59 |
| Ex.2 | PET | MXD6/MA-Pbd/Co | 3 | 50 | 2.30 |
| Ex.3 | PET | MXD6/MA-Pbd/Co | 3 | 50 | 2.18 |
| Ex.4 | PET | MXD6/MA-Pbd/Co | 3 | 40 | 1.59 |
| Ex.5 | PET | MXD6/MA-Pbd/Co | 3 | 30 | 1.14 |
| Ex.6 | PET | MXD6/MA-Pbd/Co | 8 | 30 | 1.40 |
| Ex.7 | PET | MXD6/MA-Pbd/Co | 3 | 30 | 0.99 |
| Ex.8 | PET | MXD6/MA-Pbd/Co | 8 | 30 | 1.09 |
| Ex.9 | PET | MXD6/Co | 8 | 10 | 0.70 |
| Ex.10 | PET | MXD6/MA-Pbd/Co | – | 2 | 0.51 |
| Comp.Ex.1 | PET | MXD6/MA-Pbd/Co | 3 | 50 | 2.95 |
| Comp.Ex.2 | PET | MXD6/MA-Pbd/Co | 3 | 60 | 4.30 |
| Comp.Ex.3 | PET | MXD6/Co | 8 | 5 | 0.70 |

MXD6: polymetaxylyleneadipamide
Ma-Pbd: liquid maleic anhydride-modified polybutadiene
Co: cobalt neodecanoate

EP 1 655 238 B1

Table 1 (continued)

| | Whole area N of islands of component (cm²/bottle) | Full-filled multi-layer container (cm³) | N/M | O₂ concentration in water after pressure at 22°C 14 day (ppm) |
|---|---|---|---|---|
| Ex.1 | 11591 | 327 | 35.4 | 377 |
| Ex.2 | 7989 | 327 | 24.4 | 590 |
| Ex.3 | 8410 | 327 | 25.7 | 376 |
| Ex.4 | 9254 | 327 | 28.3 | 239 |
| Ex.5 | 9657 | 310 | 31.2 | 254 |
| Ex.6 | 21024 | 310 | 67.8 | 190 |
| Ex.7 | 11181 | 310 | 36.1 | 276 |
| Ex.8 | 26903 | 310 | 86.8 | 212 |
| Ex.9 | 7561 | 310 | 24.4 | 599 |
| Ex.10 | 25980 | 310 | 83.8 | 106 |
| Comp.Ex.1 | 6237 | 327 | 19.1 | 878 |
| Comp.Ex.2 | 2773 | 375 | 7.4 | 704 |
| Comp.Ex.3 | 3780 | 310 | 12.2 | 1021 |

**Claims**

1.  A packing container having oxygen absorbing layers comprising a base material resin component (component A) of a thermoplastic polyester resin and an oxygen absorbing functional component (component B) containing a gas barrier resin, an oxidizing organic component and a transition metal catalyst, the oxygen absorbing layers being constituted by the base material resin component (component A)forming a continuous phase of a sea portion and by the oxygen absorbing functional component (component B)forming a dispersed phase of island portions, wherein the ratio (N/M) of the whole surface area (N cm²) of the island portions of the oxygen absorbing functional component (component B) in the oxygen absorbing layers to the volume (M cm³) of the packing container is not smaller than 20 (cm⁻¹).

**2.** A packing container according to claim 1, wherein the island portions in the oxygen absorbing layers have an average particle diameter of smaller than 3.5 $\mu$m.

**3.** A packing container according to claim 1, wherein the thermoplastic polyester resin is a polyethylene terephthalate.

**4.** A packing container according to claim 1, wherein the gas barrier resin is a polyamide resin obtained by the polycondensation reaction of a diamine component containing chiefly a xylylenediamine having a terminal amino group concentration of not smaller than 40 eq/10$^6$ g with a dicarboxylic acid component.

**5.** A packing container according to claim 1, wherein the oxidizing organic component comprises a polymer derived from a polyene.

**6.** A packing container according to claim 5, wherein the polymer derived from a polyene is an acid-modified polyene polymer.

**7.** A packing container according to claim 1, wherein the oxygen absorbing functional component (component B) contains the oxidizing organic component in an amount of 0.01 to 10% by weight.

**8.** A packing container according to claim 1, wherein the oxygen absorbing functional component (component B) contains the transition metal catalyst in an amount of 100 to 3000 ppm calculated as transition metal atoms.

**9.** A packing container according to claim 1, wherein the transition metal catalyst is a cobalt salt of carboxylic acid.

**10.** A packing container according to claim 1, wherein the oxidizing organic component is not existing in the sea portion.

**11.** A packing container according to claim 1, wherein the oxygen absorbing functional component (component B) comprises an oxidizing organic component and a transition metal catalyst.

**12.** A packing container according to claim 11, wherein the oxidizing organic component is a polyamide resin obtained by the polycondensation reaction of a diamine component containing chiefly a xylylenediamine having a terminal amino group concentration of smaller than 40 eq/10$^6$ g with a dicarboxylic acid component.

**13.** A packing container according to claim 1, wherein the packing container is the one having a multi-layer structure laminating another layer on the oxygen absorbing layers.

**14.** A packing container according to claim 13, wherein the oxygen absorbing layers contain the oxygen absorbing functional component (component B) in an amount of 10 to 60% by weight.

**Patentansprüche**

**1.** Verpackungsbehälter, der sauerstoffabsorbierende Schichten aufweist, die eine Grundstoffharzkomponente (Komponente A) eines thermoplastischen Polyesterharzes und eine sauerstoffabsorbierende funktionale Komponente (Komponente B), die ein Gasbarriereharz, eine oxidierende organische Komponente und einen Überangsmetallkatalysator enthält, umfassen, wobei sich die sauerstoffabsorbierenden Schichten aus der Grundstoffharzkomponente (Komponente A), die eine kontinuierliche Phase eines Meeresbereichs bildet, und aus der sauerstoffabsorbierenden funktionalen Komponente (Komponente B), die eine verteilte Phase von Inselbereichen bildet, zusammensetzen, worin das Verhältnis (N/M) der gesamten Oberfläche (N cm$^2$) der Inselbereiche der sauerstoffabsorbierenden funktionalen Komponente (Komponente B) in den sauerstoffabsorbierenden Schichten zum Volumen (M cm$^3$) des Verpackungsbehäers nicht kleiner als 20 (cm$^{-1}$) ist.

**2.** Verpackungsbehälter nach Anspruch 1, worin die Inselbereiche in den sauerstoffabsorbierenden Schichten einen durchschnittlichen Teilchendurchmesser von kleiner als 3,5 $\mu$m aufweisen.

**3.** Verpackungsbehälter nach Anspruch 1, worin das thermoplastische Polyesterharz ein Polyethylenterephthalat ist.

**4.** Verpackungsbehälter nach Anspruch 1, worin das Gasbarriereharz ein Polyamidharz ist, das durch die Polykondensationsreaktion einer Diaminkomponente, die hauptsächlich ein Xylylendiamin mit einer Konzentration der terminalen Aminogruppe von nicht kleiner als 40 Äqu./$10^6$ g enthält, mit einer Dicarbonsäurekomponente erhalten werden kann.

**5.** Verpackungsbehälter nach Anspruch 1, worin die oxidierende organische Komponente ein Polymer umfasst, das sich von einem Polyen ableitet.

**6.** Verpackungsbehälter nach Anspruch 5, worin das Polymer, das sich von einem Polyen ableitet, ein säuremoditiziertes Polyenpolymer ist.

**7.** Verpackungsbehälter nach Anspruch 1, worin die sauerstoffabsorbierende funktionale Komponente (Komponente B) die oxidierende organische Komponente in einer Menge von 0,01 bis 10 Gewichts-% enthält.

**8.** Verpackungsbehälter nach Anspruch 1, worin die sauerstoffabsorbierende funktionale Komponente (Komponente B) den Übergangsmetallkatalysator in einer Menge von 100 bis 3000 ppm, berechnet als Übergangsmetallatome, enthält.

**9.** Verpackungsbehälter nach Anspruch 1, worin der Übergangsmetallkatalysator ein Cobaltsalz einer Carbonsäure ist.

**10.** Verpackungsbehälter nach Anspruch 1, worin die oxidierende organische Komponente nicht in dem Meeresbereich vorliegt.

**11.** Verpackungsbehälter nach Anspruch 1, worin die sauerstoffabsorbierende funktionale Komponente (Komponente B) eine oxidierende organische Komponente und einen Übergangsmetallkatalysator umfasst.

**12.** Verpackungsbehälter nach Anspruch 11, worin die oxidierende organische Komponente ein Polyamidharz ist, das durch die Polykondensationsreaktion einer Diaminkomponente, die hauptsächlich ein Xylylendiamin mit einer Konzentration der terminalen Aminogruppe von kleiner als 40 Äqu./$10^6$ g enthält, mit einer Dicarbonsäurekomponente erhalten werden kann.

**13.** Verpackungsbehälter nach Anspruch 1, worin der Verpackungsbehälter der ist, der eine mehrschichtige Struktur aufweist, die eine andere Schicht auf den sauerstoffabsorbierenden Schichten beschichtet.

**14.** Verpackungsbehälter nach Anspruch 13, worin die sauerstoffabsorbierenden Schichten die sauerstoffabsorbierende funktionale Komponente (Komponente B) in einer Menge von 10 bis 60 Gewichts-% enthalten.

**Revendications**

**1.** Conteneur d'emballage possédant des couches d'absorption de l'oxygène, comprenant un composant de résine de matériau de base (composant A) d'une résine polyester thermoplastique et un composant fonctionnel d'absorption de l'oxygène (composant B) contenant une résine de barrière aux gaz, un composant organique oxydant et un catalyseur à base de métal de transition, les couches d'absorption de l'oxygène étant constituées du composant de résine de matériau de base (composant A) formant une phase continue d'une portion de mer et du composant fonctionnel d'absorption de l'oxygène (composant B) formant une phase dispersée de portions d'îles, où le rapport (N/M) de la surface totale (N cm$^2$) de la portion d'îles du composant fonctionnel d'absorption de l'oxygène (composant B) dans les couches d'absorption de l'oxygène au volume (M cm$^3$) du conteneur d'emballage n'est pas inférieur à 20 (cm$^{-1}$).

**2.** Conteneur d'emballage selon la revendication 1, dans lequel les portions d'îles dans les couches d'absorption de l'oxygène possèdent un diamètre de particules moyen inférieur à 3,5 $\mu$m.

**3.** Conteneur d'emballage selon la revendication 1, dans lequel la résine polyester thermoplastique est un téréphtalate de polyéthylène.

**4.** Conteneur d'emballage selon la revendication 1, dans lequel la résine de barrière aux gaz est une résine polyamide obtenue par une réaction de polycondensation d'un composant de diamine contenant principalement une xylylènediamine ayant une concentration en groupements amine terminaux non inférieure à 40 éq./$10^6$ g avec un composant d'acide dicarboxylique.

**EP 1 655 238 B1**

5. Conteneur d'emballage selon la revendication 1, dans lequel le composant organique oxydant comprend un polymère dérivé d'un polyène.

6. Conteneur d'emballage selon la revendication 5, dans lequel le polymère dérivé d'un polyène est un polymère de polyène modifié à l'acide.

7. Conteneur d'emballage selon la revendication 1, dans lequel le composant fonctionnel d'absorption de l'oxygène (composant B) contient le composant organique oxydant selon une quantité allant de 0,01 à 10% en poids.

8. Conteneur d'emballage selon la revendication 1, dans lequel le composant fonctionnel d'absorption de l'oxygène (composant B) contient le catalyseur à base de métal de transition selon une quantité allant de 100 à 3000 ppm, calculé comme atomes de métal de transition.

9. Conteneur d'emballage selon la revendication 1, dans lequel le catalyseur à base de métal de transition est un sel de cobalt d'acide carboxylique.

10. Conteneur d'emballage selon la revendication 1, dans lequel le composant organique oxydant n'existe pas dans la portion de mer.

11. Conteneur d'emballage selon la revendication 1, dans lequel le composant fonctionnel d'absorption de l'oxygène (composant B) contient un composant organique oxydant et un catalyseur à base de métal de transition.

12. Conteneur d'emballage selon la revendication 11, dans lequel le composant organique oxydant est une résine polyamide obtenue par une réaction de polycondensation d'un composant de diamine contenant principalement une xylylènediamine ayant une concentration en groupements amine terminaux inférieure à 40 éq./$10^6$ g avec un composant d'acide dicarboxylique.

13. Conteneur d'emballage selon la revendication 1, dans lequel le conteneur d'emballage est un conteneur ayant une structure multicouches de stratification d'une autre couche sur les couches d'absorption de l'oxygène.

14. Conteneur d'emballage selon la revendication 13, dans lequel les couches d'absorption de l'oxygène contiennent le composant fonctionnel d'absorption de l'oxygène (composant B) selon une quantité allant de 10 à 60% en poids.

**18**

# Fig. 1

# Fig. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 63001824 A
- JP 63203540 A
- JP 1278344 A

- WO 2500846 A
- JP 2002241608 A
- US 2003022974 A